# EUROPEAN PATENT APPLICATION

(11) **EP 4 675 481 A1**
(43) Date of publication of application: **07.01.2026**
(21) Application number: 25153063.0
(22) Date of filing: 21.01.2025
(51) Int. Cl.: G06F 21/62, G06F 12/14, G06F 21/79, H04L 9/08

(54) **SYSTEMS AND METHODS FOR SECURING DATA IN MEMORY DEVICES**

(30) Priority: 02.07.2024 US 202463666980 P; 04.09.2024 US 202418824591
(71) Applicant: Samsung Electronics Co., Ltd., Suwon-si, Gyeonggi-do 16677 (KR)
(72) Inventor: KACHARE, Ramdas P., San Jose, 95134 (US); BEYGI, Amir, San Jose, 95134 (US); KAHN, Caroline Diana, San Jose, 95134 (US); ZHAO, Dongwan, San Jose, 95134 (US); LAU, Jimmy, San Jose, 95134 (US); LAC, Tinh, San Jose, 95134 (US)
(74) Representative: Kuhnen & Wacker Patent- und Rechtsanwaltsbüro PartG mbB

(57) **Abstract**

Systems and methods for securing data in a memory device are described. The memory device may be coupled to a computing device (102) and may comprise a volatile storage medium (120), a non-volatile storage medium (122), and a processor configured to communicate with the volatile storage medium (120) and the non-volatile storage medium (122). The processor may be configured to: store one or more keys; receive data from the computing device (102); identify a first key of the one or more keys associated with the data; encrypt the data based on the first key; output encrypted data; and store the encrypted data in the non-volatile storage medium (122).

## Description

### FIELD

One or more aspects of embodiments according to the present disclosure relate to memory devices, and more particularly to securing data stored in the memory devices.

### BACKGROUND

Applications may perform computations on large amounts of data. As such types of computations increase, it may be desirable to employ efficient and cost-effective data processing and storage solutions.

The above information disclosed in this Background section is only for enhancement of understanding of the background of the present disclosure, and therefore, it may contain information that does not form prior art.

### SUMMARY

One or more embodiments of the present disclosure are directed to a memory device coupled to a computing device (or configured to be coupled to a computing device). The memory device comprises a volatile storage medium; a non-volatile storage medium; and a processor configured to communicate with the volatile storage medium and the non-volatile storage medium. The processor may be configured to: store one or more keys; receive data from the computing device; identify a first key of the one or more keys associated with the data; encrypt the data based on the first key, and output encrypted data; and store the encrypted data in the non-volatile storage medium.

In some embodiments, the processor is configured to transmit capacity of the non-volatile storage medium for access by the computing device as volatile memory.

In some embodiments, the first key is assigned to a first region of the non-volatile storage medium, and a second key of the one or more keys is assigned to a second region of the non-volatile storage medium.

In some embodiments, the first region is allocated to a first virtual machine of the computing device, and the second region is allocated to a second virtual machine of the computing device.

In some embodiments, a region of the non-volatile storage medium is allocated to a virtual machine. The computing device may be configured to provide the first key based on allocating a region of the non-volatile storage medium to a virtual machine of the computing device.

In some embodiments, the first key has a first status, and the processor may be configured to mark the first key as having a second status different from the first status based on a command from the computing device.

In some embodiments, the processor is further configured to: decrypt the data based on the first key, and output decrypted data; and store the decrypted data in the volatile storage medium.

In some embodiments, the processor is further configured to: identify second data in the volatile storage medium for being removed from the volatile storage medium; encrypt the second data based on a second key of the one of the one or more keys, and output a second encrypted data; and store the second encrypted data in the non-volatile storage medium.

In some embodiments, the computing device is configured to transmit a key identifier and the data in a request, and the processor is configured to identify the first key based on the key identifier.

In some embodiments, the first key is associated with a first criterion related to the data, and a second key of the one or more keys is associated with a second criterion related to the data. The processor may be further configured to: detect the first criterion; and select the first key based on detecting the first criterion.

One or more embodiments of the present disclosure are also directed to a method comprising: storing by a memory device coupled to a computer device, one or more keys; receiving by the memory device data from the computing device; identifying by the memory device a first key of the one or more keys associated with the data; encrypting by the memory device the data based on the first key, and outputting encrypted data; and storing by memory device the encrypted data in a non-volatile storage medium of the memory device.

These and other features, aspects and advantages of the embodiments of the present disclosure will be more fully understood when considered with respect to the following detailed description, appended claims, and accompanying drawings.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a block diagram of a computing environment for securing data in memory devices according to one or more embodiments;
FIG. 2 depicts a block diagram of a memory device according to one or more embodiments;
FIG. 3 depicts another block diagram of a memory device according to one or more embodiments;
FIG. 4 depicts a conceptual layout diagram of data stored by a key manager according to one or more embodiments;
FIG. 5 depicts a flow diagram of a process for securing data in a memory device according to one or more embodiments;
FIG. 6 depicts another flow diagram of a process for securing data in a memory device according to one or more embodiments; and
FIG. 7 is a flow diagram of a process for allocating keys by a host according to one or more embodiments.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

With the increased use of artificial intelligence, computation and storage requirements have also increased. Running one or more of these computations may result in the processor running out of capacity in its main memory (e.g., dynamic random-access memory (DRAM)), causing the processor to access a secondary storage device (e.g., solid state drive (SSD)), which may be slower than the main memory.

With the advent of technologies such as compute express link (CXL) or other cache-coherent protocols, it may be possible to expand the capacity provided by the main memory via a memory expansion device that may be less expensive than main memory, but faster to access than SSDs. The memory devices may include volatile memory as well as non-volatile memory. Because the non-volatile memory stores data persistently, there may be security risks in using the memory device. For example, if the device is stolen or otherwise falls in the hands of an unauthorized person, the security of the data stored in the non-volatile memory may be compromised. Also, if the memory device is used in a data center with multiple tenants or customers that may share the device, there may be a risk that data stored in the device for one tenant may be accessed by another tenant.

Although security mechanisms such as encrypting the data by a central processing unit (CPU) prior to storage into the memory device could be used, such mechanisms may add processing complexities that may negatively affect CPU performance metrics. The memory expansion device may also be generally advertised to the host as volatile memory. The host may not be configured to encrypt data that is stored in volatile memory as such data is lost upon power down and is not persistently stored. Thus, an efficient solution for protecting data stored in a memory expansion device that includes non-volatile memory but is advertised as volatile memory, may be desired.

In general terms, embodiments of the present disclosure are directed to a memory expansion device that is configured with encryption and decryption engines for encrypting and decrypting data stored in the device using one or more encryption keys. In some embodiments, the memory range in the memory expansion device is divided into one or more smaller memory regions identified by one or more address ranges. A key or set of keys may be associated with one or more of the regions. The data in the region(s) may be encrypted such that the data cannot be accessed without a key that decrypts the data.

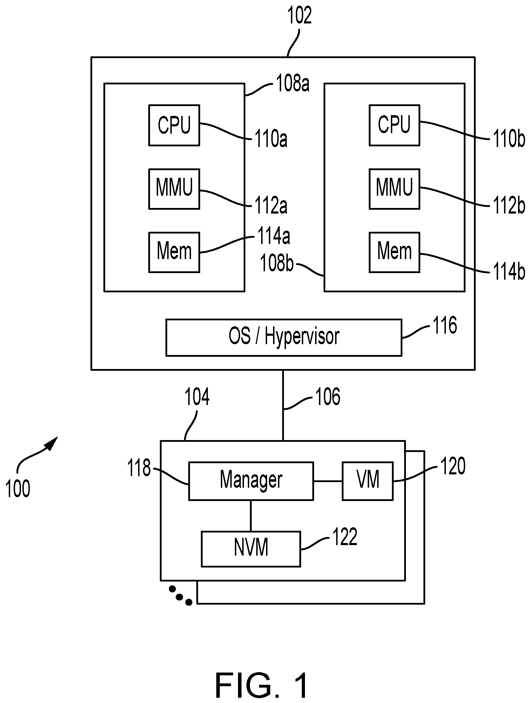

FIG. 1 depicts a block diagram of a computing environment 100 for securing data in memory devices according to one or more embodiments. The computing environment may include one or more host computing devices (also referred to as hosts) 102 coupled to one or more memory expansion devices (also referred to as a memory device) 104. In some embodiments, the one or more computing devices 102 are housed in a rack (not shown) along with the one or more memory expansion devices 104.

The computing device 102 and the memory expansion device 104 may communicate with each other over an interface 106. In some embodiments, the interface 106 (e.g., the connector and the protocol thereof) includes various general-purpose interfaces such as, for example, Ethernet, Universal Serial Bus (USB), and/or the like. In some embodiments, the interface 106 (e.g., the connector and the protocol thereof) may include (or may conform to) a Compute Express Link (CXL), Cache Coherent Interconnect for Accelerators (CCIX), dual in-line memory module (DIMM) interface, Small Computer System Interface (SCSI), Non Volatile Memory Express (NVMe), Peripheral Component Interconnect Express (PCIe), remote direct memory access (RDMA) over Ethernet, Serial Advanced Technology Attachment (SATA), Fiber Channel, Serial Attached SCSI (SAS), NVMe over Fabric (NVMe-oF), iWARP protocol, InfiniBand protocol, 5G wireless protocol, Wi-Fi protocol, Bluetooth protocol, and/or the like.

In some embodiments, the computing device 102 hosts one or more virtual machines 108a-108b (collectively referenced as 108). The one or more virtual machines 108 may share a processor 110a-110b (collectively referenced as 110), memory management unit (MMU) 112a-112b (collectively referenced as 112), and memory 114a-114b (collectively referenced as 114). The processor 110 may be configured to run one or more virtual machines 108 which run one or more processes or applications such as, for example, a big data analysis application, e-commerce application, database application, machine learning application, and/or the like. The MMU 112 may be configured to translate a logical memory address contained in a data access request from a process, into a physical memory address. The translation may be via a page table and/or translation lookaside buffer (TLB) (not shown) located, for example, in the MMU 112. The memory 114 may be an instance of a main memory (not shown) connected to the processor 110 such as a DRAM, and/or the like.

In some embodiments, an operating system or a hypervisor software 116 may manage allocation of the physical resources of the computing device 102 to allow the device to support multiple virtual machines (e.g., virtual machine 108a and virtual machine 108b). In some embodiments, the hypervisor software 116 implements a device passthrough to allow the virtual machine 108 to access the memory device 104 (e.g., directly), without relying on driver capabilities from the computing device 102.

In some embodiments, the memory device 104 is shared by the one or more virtual machines 108. In this regard, a region of the memory device 104 may be allocated to the virtual machine 108 based on launching of the virtual machine. The virtual machine may access the allocated region as a processor-attached volatile memory using a cache-coherent protocol such as, for example, the CXL.mem or CXL.cache.

The memory device 104 may take the form of a solid state drive (SSD), persistent memory, and/or the like. In some embodiments, the memory device 104 includes (or is embodied as) an SSD with cache coherency and/or computational capabilities. In some embodiments, the memory device 104 is accessible as a device-attached memory (e.g., via CXL.mem or CXL.cache) at a byte level granularity, although embodiments are not limited thereto.

In some embodiments, the memory device 104 includes a memory manager 118, volatile memory (VM) 120, and non-volatile memory (NVM) 122. The VM 120 may include (or may be) DRAM, but the present disclosure is not limited thereto, and the VM 120 may be any suitable kind of volatile memory such as, for example, random access memory (RAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory component (RIMM), dual in-line memory component (DIMM), single in-line memory component (SIMM), video random access memory (VRAM), cache memory (including various levels), register memory, and/or the like.

Although FIG. 1 depicts a single VM 120 for simplicity sake, a person of skill in the art will recognize that the memory device 104 may include other volatile memory for temporarily storing other data for the storage device.

In some embodiments, the VM 120 is used and managed as cache memory. In this regard, the VM 120 may store copies of data stored in the NVM 122. For example, data that is to be accessed by a virtual machine 108 in the near future may be copied from the NVM 122 to the VM 120 for allowing the data to be retrieved from the VM 120 instead of the NVM 122. In some embodiments, the VM 120 has a lower access latency than the NVM 122. Thus, in some embodiments, accessing data from the VM 120 helps improve overall system performance and responsiveness.

The NVM 122 may persistently store data received, for example, from the host 102. The NVM 122 may include, for example, NAND flash memory (e.g., Serial, NAND, NOR, and/or the like), but the present disclosure is not limited thereto, and the NVM 122 may include any suitable kind of memory for persistently storing the data including, for example, MRAM, PRAM, a floppy disk, flexible disk, hard disk, enterprise flash drive, magnetic tape, or any other non-transitory magnetic medium, and/or the like.

The memory manager 118 may receive input/output (I/O) requests (e.g. load or store requests) from the host 102, and transmit commands to and from the NVM 122 and/or VM 120 for fulfilling the I/O requests. In this regard, the memory manager 118 may include at least one processing component embedded thereon for interfacing with the host 102, the VM 120, and the NVM 122. The processing component may include, for example, a digital circuit (e.g., a microcontroller, a microprocessor, a digital signal processor, or a logic device (e.g., a field programmable gate array (FPGA), an application-specific integrated circuit (ASIC), and/or the like)) capable of executing data access instructions (e.g., via firmware and/or software) to provide access to and from the data stored in the VM 120 or NVM 122 according to the data access instructions.

In some embodiments, the memory manager 118 maintains one or more encryption keys (e.g., in a portion of the VM 120 or in a separate volatile memory). The memory manager 118 may be configured to encrypt data stored in the NVM 122 based on one or more of the keys. The key used for encrypting the data may depend, for example, on a region of the NVM 122 in which the data is stored, criteria associated with the data, criteria associated with the request, and/or the like. The encrypted data may be retrieved from the NVM 122 based on a load request from a virtual machine 108. The memory manager 118 may decrypt the data using the key, and return the clear, unencrypted data to the requesting virtual machine 108. In some embodiments, the encryption and decryption of data is transparent to the virtual machine or application or system software that is storing or loading the data. In some embodiments, a layer of security software on the host enforces the key association to the VMs 120.

In some embodiments, the memory manager 118 includes an interface module for interfacing with the host 102. The interface module may include physical connections as well as software instructions which may be executed by the processing component of the memory manager 118. In some embodiments, the interface module allows the memory device 104 to exchange data with the host 102 using a protocol such as, for example, CXL, CCIX, DIMM, SCSI, NVMe, PCIe, RDMA over Ethernet, SATA, Fiber Channel, SAS, NVMe-oF, iWARP protocol, InfiniBand protocol, 5G wireless protocol, Wi-Fi protocol, Bluetooth protocol, and/or the like.

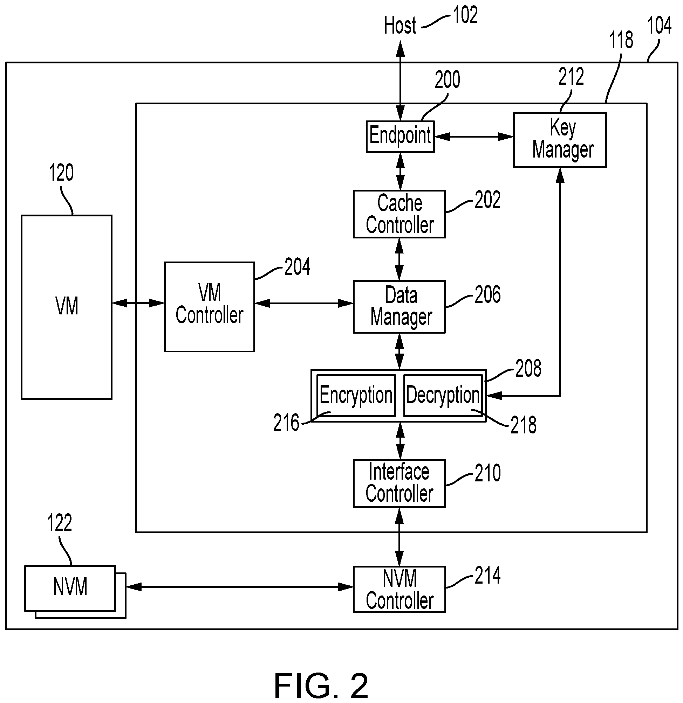

FIG. 2 depicts a block diagram of the memory device 104 according to one or more embodiments. In some embodiments, the memory manager 118 included in the memory device 104 includes a communication endpoint 200 for interfacing with the host 102. The communication endpoint 200 may include physical connections and circuitry for an associated protocol (e.g., CXL) that allows the memory device 104 to exchange data with the host 102.

In some embodiments, the memory manager 118 also includes a cache controller 202, VM controller 204, data manager 206, security engine 208, interface controller 210, and key manager 212. Although the various controllers 202, 204, 210, security engine 208, and key manager 212 (collectively referred to as control components) are assumed to be separate functional units, a person of skill in the art will recognize that the functionality of the control components may be combined or integrated into a single component, or further subdivided into further sub-components without departing from the scope of the inventive concept.

In some embodiments, the cache controller 202 is aware of the cache architecture utilized by the VM 120, and may use the information for managing the storing and eviction of data in and out of the VM. For example, the cache controller 202 may process a memory access request received from the host 102 (e.g., from a virtual machine 108 of the host 102) via the communication endpoint 200, and generate a cache address for a requested physical address. The cache controller 202 may further determine whether the request results in a cache hit or miss. In addition, the cache controller 202 may monitor the fullness of the VM 120 and identify and evict entries from the memory according to a configured cache algorithm (e.g., a cache replacement policy) if the VM 120 has reached a threshold fullness level.

In some embodiments, the cache controller 202 passes relevant data to the data manager 206 for servicing the memory access command and retrieving or writing data from or to the VM 120 or the NVM 122. For example, if the data requested by the host 102 via a load command is found in the VM 120 (e.g., a cache hit), the cache controller 202 may pass the cache address to the data manager 206 for accessing the data from the VM 120. In some embodiments, the data manager 206 may communicate with the VM controller 204 for retrieving the data from the cache address.

In the event that the data requested by the host 102 is not located in the VM 120 (e.g., a cache miss), the cache controller 202 may pass to the data manager 206 the address of the NVM 122 from where the data is to be retrieved. The data manager 206 may communicate the address of the NVM 122 to the security engine 208. In embodiments where the request from the host 102 is a data store request, the data manager 206 may pass to the security engine 208 the address of the NVM 122 where the data is to be written.

In some embodiments, the security engine 208 includes an encryption unit 216 and a decryption unit 218. The encryption and decryption units 216, 218 may be configured to respectively encrypt and decrypt data stored in an address of the NVM 122 using a cryptographic key identified by the key manager 212. The encryption algorithm used by the security engine 208 may include a symmetric encryption algorithm, an asymmetric encryption algorithm, and/or the like.

In some embodiments, the key manager 212 identifies the key to be used for the encryption and decryption based on the address (e.g., the logical address) of the NVM 122 where data is to be stored or retrieved. In this regard, the key manager 212 maintains one or more keys per region of the NVM 122. The region may be associated with a range of addresses of the NVM. The regions may have a fixed or variable size. In some embodiments, the memory regions are allocated to one or more virtual machines 108 and applications running on the virtual machines. The allocation of the memory regions may be carried out by the hypervisor software 116.

Criterion other than or in addition to the NVM address may be used for identifying a key for encrypting or decrypting data. For example, if multiple keys are stored for a region, a key may be selected based on time, date, geographic location, and/or the like. For example, one key may be used for the weekend while another key may be used for the weekday. In some embodiments, a memory region allocated to a VM may be further sub-allocated to various applications running on the VM. In this case, multiple keys within a region may be used to isolate multiple applications within a VM.

In some embodiments, data eviction may be performed when the VM 120 has reached a threshold fullness level, and data identified in a request from the host 102 cannot be saved into the VM 120. In this case, the cache controller 202 may pass the cache address of the data to be evicted to the data manager 206. The cache address may be associated (e.g., by the cache controller 202) to a physical address. In some embodiments, both the cache address and the associated physical address are provided to the data manager 206. The data manager 206 may communicate with the security engine 208 to encrypt the data to be evicted based on a key provided by the key manager 212. In some embodiments, the key manager 212 identifies the key based on the physical address associated with the cache address of the data to be evicted. The encrypted data may be written to the NVM 122 via the interface controller 210.

In some embodiments, the NVM 122 is provided on a separate chip from the memory manager 118. In this embodiment, the interface controller 210 interfaces with the NVM 122 via an NVM controller 214, using a storage access protocol such as, for example, a non-volatile memory express (NVMe) protocol, although embodiments are not limited thereto. The interface controller 210 may generate read and write commands (e.g., NVMe read and write commands) for reading and writing data from and to the NVM 122. The commands may be provided to an NVM controller 214 for storing, for example, in submission queues or completion queues of the NVM controller 214. For example, the interface controller 210 may generate and store a read command in a submission queue of the NVM controller 214 for reading data from the NVM 122. The NVM 122 may retrieve the read command from the submission queue and service the read command by retrieving the requested data from the identified memory location of the NVM 122.

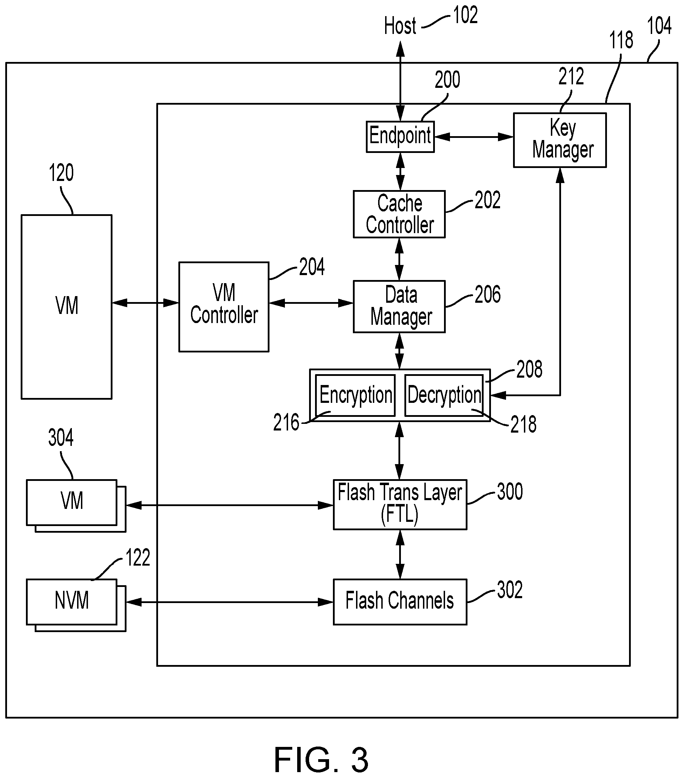

FIG. 3 depicts another block diagram of the memory device 104 according to one or more embodiments. The memory device 104 of FIG. 3 is similar to the memory device of FIG. 2, except that the NVM 122 may be provided on the same chip as the memory manager 118. According to this embodiment, the security engine 208 need not communicate with the NVM 122 via an interface controller (e.g., interface controller 210). Instead, the security engine 208 may communicate with the NVM 122 via a flash translation layer (FTL) 300 and flash channels 302. For example, the FTL 300 may translate the address of the NVM to be accessed into a flash block address. In some embodiments, the FTL 300 may use the translated address to access one or more other virtual memories 304 or the NVM 122.

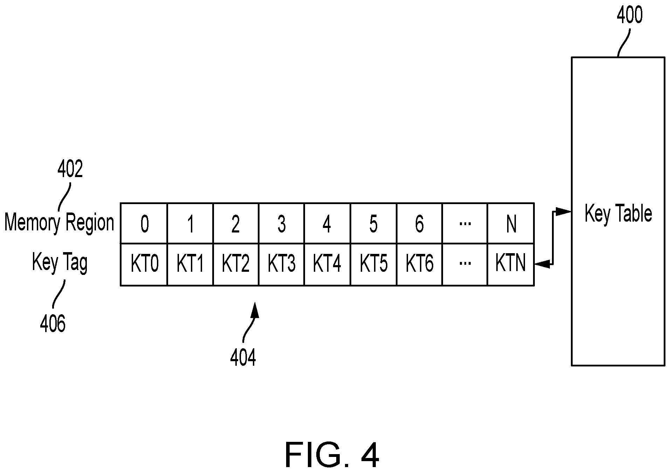

FIG. 4 depicts a conceptual layout diagram of data stored by the key manager 212 according to one or more embodiments. The key manager 212 may include a key table 400 that stores one or more keys. The keys may be provided (or updated) by the host 102, E.G. based on launching a virtual machine 108. In this regard, one or more memory regions and associated keys may be allocated to the virtual machine 108.

The keys may be download to the key manager 212 in a secure manner. In some embodiments, the transmission of the keys to the memory device 104 is encrypted. In some embodiments, the interface 106 used to download the keys is encrypted using, for example, Integrity and Data Encryption (IDE), although embodiments are not limited thereto.

The one or more keys in the key table 400 may be indexed by a memory region identifier (ID) 402. A first memory region ID may be associated with a first range of addresses of the NVM 122, and a second memory region ID may be associated with a second range of addresses of the NVM. In some embodiments, the range of addresses are associated with logical addresses of the NVM. The logical addresses of the NVM may be translated to physical addresses (e.g., NAND physical addresses) for accessing data to and from the NVM.

An appropriate region ID may be identified for a load/store request from the host 102 based on the corresponding address range that covers the requested memory address.

In some embodiments, the key manager 212 maintains a mapping table 404 for mapping key tags 406 to memory region IDs 402. In this regard, the load/store request from the host 102 may include a key tag 406 selected by the host to be used for encrypting or decrypting data associated with the request. The key manager 212 may perform a lookup of the mapping table for identifying the memory region ID 402 that corresponds to the key tag 406. A key corresponding to the identified memory region ID 402 may be retrieved from the key table 400 and provided to the security engine 208 for encrypting or decrypting the data.

In some embodiments, the host 102 manages the keys in the key table 400 by modifying the keys, invalidating the keys, and/or the like. For example, a key in the key table 400 may be identified as invalid in response to a command to delete or erase data from the memory region associated with the key. For example, the entry in the key table storing the key to be invalidated may be marked as invalid.

Data in a memory location of the NVM 122 that is deleted may still remain in the NVM even after the deletion because the data deletion may simply be an update of the metadata in the memory location instead of a physical erase of the data from the memory location. Thus, an unauthorized person may retrieve the data even if the data is intended to be deleted.

In some embodiments, the use of keys to encrypt and decrypt data may provide a secure erase of data. In some embodiments, the host 102 may transmit a command to erase or invalidate a key associated with the deleted data. The key manager 212 may mark an entry in the key table 400 associated with the key as invalid. Without access to the key, an unauthorized user may be unable to decrypt data stored in the NVM even if the user is able to gain access to the data.

In some embodiments, the keys in the key table 400 are used for purposes other than encryption/decryption. In some embodiments, the keys are used for locking access to corresponding memory regions of the NVM 122. For example, the host 102 may temporarily invalidate or lock a key at certain times of the day for preventing modification to data stored in the corresponding memory regions, such as when reports are to be run at the end of the day, and no modification is to be allowed for the data when the reports are run. In another example, a database stored in the NVM 122 may be shared by multiple users. When a user is using a key to access the database, the key may be deemed locked to prevent access by another user. A key may be locked by marking a status of the key in the key table 400 as locked.

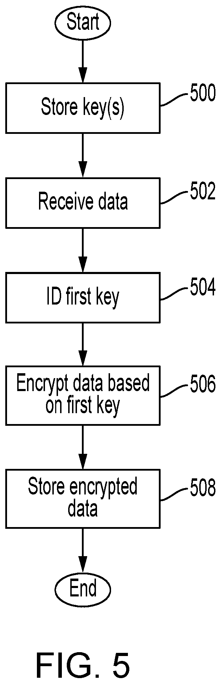

FIG. 5 depicts a flow diagram of a process for securing data in the memory device 104 according to one or more embodiments. In act 500, the memory manager 118 receives one or more keys from the host 102, and stores the keys in the key table 400 in association with one or more memory regions 402. The keys may be transmitted by the host 102 in a secure manner.

In act 502, the memory manager 118 receives data from the host 102. The data may be identified, for example, as data to be stored in the memory device 104. In some embodiments, the data is transmitted with a data store request. The data store request may identify an address (e.g., the logical address) of the NVM 122 where the data is to be stored.

In act 504, the key manager 212 identifies the key (e.g., a first key) among the keys stored in the key table 400 based on the request. In some embodiments, the key manager 212 is configured to identify the memory address associated with the data, and identify a memory region ID 402 based on the memory address. The memory region ID may be used as index to the key table 400 to retrieve the corresponding key.

In some embodiments, the key is identified based on a key tag included in the request from the host. The key tag may be used to identify the corresponding memory region ID 402 which may in turn be used to retrieving the corresponding key from the key table 400.

In act 506, the key is used by the encryption unit 216 to encrypt the data. The encrypted data may be stored in the NVM 122 in act 508.

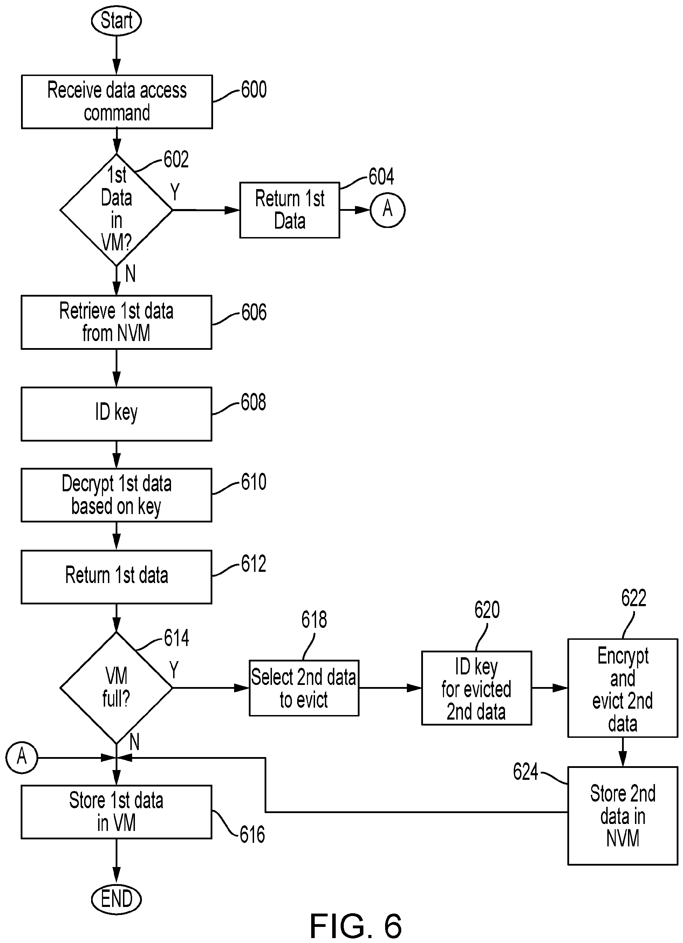

FIG. 6 depicts another flow diagram of a process for securing data in the memory device 104 according to one or more embodiments. The process starts, and in act 600, the memory manager 118 receives a data access command from a virtual machine 108 of the host 102. The data access command may be, for example, a data load command.

In act 602, a determination is made as to whether the requested data (first data) is located in the VM 120. If the answer is YES, the data is returned in act 604, and the process ends.

If the data is not located in the VM 120, the data is retrieved from the NVM 122 in act 606 from a memory address identified in the data access command.

In act 608 a key associated with the memory region covering the memory address is identified by the key manager 212 from the key table 400. In some embodiments, other criterion associated with the request (e.g., time of day, day of week, geographic location of host 102) may be used to select a key from various keys associated with the memory region. In some embodiments, the selected key may be marked as being "locked" in the key table 400.

In act 610, the selected key is used by the decryption unit 216 to decrypt the retrieved data.

In act 612, the decrypted data is returned to the requesting virtual machine 108.

In some embodiments, the data may be cached in the VM 120 for faster retrieval of the data in future requests. In this regard, a determination is made in act 614 as to whether the VM 120 is full. If the answer is NO, the decrypted data is stored in the VM 120, in act 616, according to a cache placement algorithm executed by the cache controller.

If the answer is YES, a second data is selected in act 618 for being evicted from the VM 120. The evicted data may be selected based on an eviction algorithm executed by the cache controller 202.

In act 620, a memory address is identified for the key to be evicted, and a key is identified from the key table 400 by the key manager 212.

In act 622, the encryption unit 216 encrypts the evicted data based on the key, and the encrypted data is stored in the NVM in act 624. The eviction of the data may make room in the VM 120 for storing the first data in act 616.

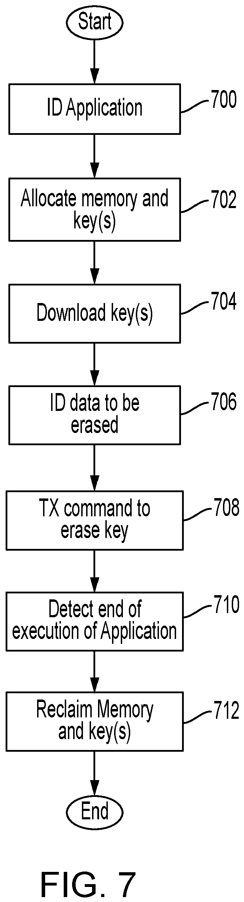

FIG. 7 is a flow diagram of a process for allocating keys by the host 102 according to one or more embodiments. The process starts, and in act 700, the host 102 identifies an application or Virtual Machine to be executed. In some embodiments, the hypervisor software 116 is invoked to provide a virtual machine 108 with resources for running the application. In some embodiments, the resources that are allocated include virtual memory for running the application. The hypervisor software 116 may allocate a selected amount of virtual memory to the application based on available memory capacity. In some embodiments, the available memory capacity is based on the capacity of the main memory attached to the processor 110 and the advertised capacity of the memory device 104. In some embodiments, the advertised capacity of the memory device 104 is substantially equivalent to the size of the NVM 122. In some embodiments, the advertised capacity of the memory device 104 is identified by the host 102 as volatile memory that may be accessed as an expansion of the main memory.

In the embodiment where the memory for the application is allocated from the memory device 104, the hypervisor software 116 identifies and allocates, in act 702, a range of memory from the memory device 104, and identifies one or more keys for the allocated range.

In act 704, the hypervisor software 116 downloads the one or more keys to the key manager 212 along with the memory range associated with the one or more keys for storing in the key table 400. In some embodiments, the transmission of the one or more keys is encrypted to securely transmit the keys to the memory device 104.

In some embodiments, the hypervisor software 116 manages the keys stored in the key table 400. For example, one or more keys in the key table may be invalidated based on detecting a criterion. For example, the hypervisor software 116 may detect, in act 706, that data stored in a memory region of the NVM 122 is to be deleted, and transmit a command to the key manager 212, in act 708, to erase the key in the memory region. The key manager 212 may respond to the command by marking the key stored in the memory region as invalid.

In act 710, the hypervisor software 116 detects that execution of the application has ended, and reclaims, in act 712, the allocated memory and key(s). The allocated memory and keys may be reused for launching another virtual machine 108.

In some embodiments, the hypervisor software 116 may maintain a list of keys provided to the key manager 212 along with status information of the keys. The status information may indicate the keys as invalid, reclaimed, and/or the like. The keys marked as reclaimed may be reused by the hypervisor software for being assigned to other virtual machines 108. In some embodiments, the keys marked as invalid may not be reused.

A person of skill in the art will appreciate that one or more embodiments of the present disclosure provide systems and methods for securing data in a memory expansion device that advertises itself to, and is accessed by, the host CPU, as volatile memory. Because the host CPU treats the memory expansion device as volatile memory, the host CPU may not invoke security mechanisms that it uses to protect data in non-volatile memory. The use of keys by the memory device to encrypt and decrypt data stored in the memory expansion device may provide security of the data in a manner that is transparent to the host CPU. The systems and methods of the present disclosure do not rely on a fixed key for the whole memory. In some embodiments, multiple keys are used, allowing data security to be provided separately, for example, on a tenant-by-tenant (e.g., virtual-machine by virtual-machine) basis. This enables the memory expansion device to be shared across multiple virtual machines in virtualized environments. In some embodiments, because the encryption and decryption of the data is done by the memory device, the encryption/decryption does not add computational burden on the host CPU.

One or more embodiments of the present disclosure may be implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

The terminology used herein is for the purpose of describing particular embodiments only and is not intended to limit the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for securing data in memory devices have been specifically described and illustrated herein, many modifications and variations will be apparent to those skilled in the art. Accordingly, it is to be understood that systems and methods for securing data in memory devices constructed according to principles of this disclosure may be embodied other than as specifically described herein. The disclosure is also defined in the following claims, and equivalents thereof.

The systems and methods for securing data in a memory device may contain one or more combinations of features set forth in the following statements.

Statement 1. A memory device coupled to a computing device, the memory device comprising: a volatile storage medium; a non-volatile storage medium; and a processor configured to communicate with the volatile storage medium and the non-volatile storage medium, the processor being configured to: store one or more keys; receive data from the computing device; identify a first key of the one or more keys associated with the data; encrypt the data based on the first key, and output encrypted data; and store the encrypted data in the non-volatile storage medium.

Statement 2. The memory device of Statement 1, wherein the processor is configured to transmit capacity of the non-volatile storage medium for access by the computing device as volatile memory.

Statement 3. The memory device of Statement 1, wherein the first key is assigned to a first region of the non-volatile storage medium, and a second key of the one or more keys is assigned to a second region of the non-volatile storage medium.

Statement 4. The memory device of Statement 3, wherein the first region is allocated to a first virtual machine of the computing device, and the second region is allocated to a second virtual machine of the computing device.

Statement 5. The memory device of Statement 1, wherein a region of the non-volatile storage medium is allocated to a virtual machine, wherein the computing device is configured to provide the first key based on allocating a region of the non-volatile storage medium to a virtual machine of the computing device.

Statement 6. The memory device of Statement 5, wherein the first key has a first status, wherein the processor is configured to mark the first key as having a second status different from the first status based on a command from the computing device.

Statement 7. The memory device of Statement 1, wherein the processor is further configured to: decrypt the data based on the first key, and output decrypted data; and store the decrypted data in the volatile storage medium.

Statement 8. The memory device of Statement 1, wherein the processor is further configured to: identify second data in the volatile storage medium for being removed from the volatile storage medium; encrypt the second data based on a second key of the one of the one or more keys, and output a second encrypted data; and store the second encrypted data in the non-volatile storage medium.

Statement 9. The memory device of Statement 1, wherein the computing device is configured to transmit a key identifier and the data in a request, wherein the processor is configured to identify the first key based on the key identifier.

Statement 10. The memory device of Statement 1, wherein the first key is associated with a first criterion related to the data, and a second key of the one or more keys is associated with a second criterion related to the data, wherein the processor is further configured to: detect the first criterion; and select the first key based on detecting the first criterion.

Statement 11. A method comprising: storing by a memory device coupled to a computer device, one or more keys; receiving by the memory device data from the computing device; identifying by the memory device a first key of the one or more keys associated with the data; encrypting by the memory device the data based on the first key, and outputting encrypted data; and storing by memory device the encrypted data in a non-volatile storage medium of the memory device.

Statement 12. The method of Statement 11 further comprising: transmitting capacity of the non-volatile storage medium for access by the computing device as volatile memory.

Statement 13. The method of Statement 11, wherein the first key is assigned to a first region of the non-volatile storage medium, and a second key of the one or more keys is assigned to a second region of the non-volatile storage medium.

Statement 14. The method of Statement 13, wherein the first region is allocated to a first virtual machine of the computing device, and the second region is allocated to a second virtual machine of the computing device.

Statement 15. The method of Statement 11, wherein a region of the non-volatile storage medium is allocated to a virtual machine, wherein the computing device is configured to provide the first key based on allocating a region of the non-volatile storage medium to a virtual machine of the computing device.

Statement 16. The method of Statement 15, wherein the first key has a first status, the method further comprising: receiving by the memory device a command from the computing device; marking by the memory device the first key as having a second status different from the first status based on the command.

Statement 17. The method of Statement 11 further comprising: decrypting the data based on the first key, and outputting decrypted data; and storing the decrypted data in a volatile storage medium.

Statement 18. The method of Statement 11 further comprising: identifying second data in a volatile storage medium of the memory device for being removed from the volatile storage medium; encrypting the second data based on a second key of the one of the one or more keys, and outputting a second encrypted data; and storing the second encrypted data in the non-volatile storage medium.

Statement 19. The method of Statement 11, wherein the computing device is configured to transmit a key identifier and the data in a request, the method further comprising: identifying by the memory device the first key based on the key identifier.

Statement 20. The method of Statement 11, wherein the first key is associated with a first criterion related to the data, and a second key of the one or more keys is associated with a second criterion related to the data, the method further comprising: detecting by the memory device the first criterion; and selecting by the memory device the first key based on detecting the first criterion.

## Claims

1. A memory device configured to be coupled to a computing device (102), the memory device (104) comprising:
a volatile storage medium (120);
a non-volatile storage medium (122); and
a processor configured to communicate with the volatile storage medium (120) and the non-volatile storage medium (122), the processor being configured to:
store (500) one or more keys;
receive (502) data from the computing device (102);
identify (504) a first key of the one or more keys associated with the data;
encrypt (506) the data based on the first key, and output encrypted data; and
store (508) the encrypted data in the non-volatile storage medium (122).

2. The memory device of claim 1, wherein the processor is configured to transmit capacity of the non-volatile storage medium (122) for access by the computing device (102) as volatile memory.

3. The memory device of claim 1 or 2, wherein the processor is further configured to:
identify second data in the volatile storage medium for being removed from the volatile storage medium;
encrypt the second data based on a second key of the one of the one or more keys, and output a second encrypted data; and
store the second encrypted data in the non-volatile storage medium.

4. The memory device of claim 1 or 2, wherein the first key is associated with a first criterion related to the data, and a second key of the one or more keys is associated with a second criterion related to the data, wherein the processor is further configured to:
detect the first criterion; and
select the first key based on detecting the first criterion.

5. The memory device of claim 1 or 2, wherein the first key is assigned to a first region of the non-volatile storage medium (122), and a second key of the one or more keys is assigned to a second region of the non-volatile storage medium (122).

6. The memory device of claim 5, wherein the first region is allocated to a first virtual machine (108a) of the computing device (102), and the second region is allocated to a second virtual machine (108b) of the computing device (102).

7. The memory device of any one of claims 1 to 6, wherein a region of the non-volatile storage medium (122) is allocated to a virtual machine (108), wherein the computing device (102) is configured to provide the first key based on allocating a region of the non-volatile storage medium (122) to a virtual machine (108) of the computing device (102).

8. The memory device of claim 7, wherein the first key has a first status, wherein the processor is configured to mark the first key as having a second status different from the first status based on a command from the computing device (102).

9. The memory device of any one of claims 1 to 8, wherein the processor is further configured to:
decrypt the data based on the first key, and output decrypted data; and
store the decrypted data in the volatile storage medium (120).

10. The memory device of any one of claims 1 to 9, wherein the computing device (102) is configured to transmit a key identifier (406) and the data in a request, wherein the processor is configured to identify the first key based on the key identifier (406).

11. A method comprising:
storing (500) by a memory device (104) coupled to a computer device (102), one or more keys;
receiving (502) by the memory device (104) data from the computing device (102);
identifying (504) by the memory device (104) a first key of the one or more keys associated with the data;
encrypting (506) by the memory device (104) the data based on the first key, and outputting encrypted data; and
storing (508) by memory device (104) the encrypted data in a non-volatile storage medium (122) of the memory device (104).

12. The method of claim 11 further comprising:
transmitting capacity of the non-volatile storage medium (122) for access by the computing device (102) as volatile memory.

13. The method of claim 11 or 12, wherein the first key is assigned to a first region of the non-volatile storage medium (122), and a second key of the one or more keys is assigned to a second region of the non-volatile storage medium (122).

14. The method of claim 13, wherein the first region is allocated to a first virtual machine of the computing device (102), and the second region is allocated to a second virtual machine of the computing device (102).

15. The method of any one of claims 11 to 14, wherein a region of the non-volatile storage medium (122) is allocated to a virtual machine, wherein the computing device (102) is configured to provide the first key based on allocating a region of the non-volatile storage medium (122) to a virtual machine of the computing device (102).

## Amended claims

### Amended claims in accordance with Rule 137(2) EPC.

1. A memory device configured to be coupled to a computing device (102), the memory device (104) comprising:
a volatile storage medium (120);
a non-volatile storage medium (122); and
a processor configured to communicate with the volatile storage medium (120) and the non-volatile storage medium (122), the processor being configured to:
store (500) at least two keys;
receive (502) data from the computing device (102);
identify (504) a key of the at least two keys associated with the data as an identified key;
encrypt (506) the data based on the identified key, and output encrypted data; and
store (508) the encrypted data in the non-volatile storage medium (122).

2. The memory device of claim 1, wherein the processor is configured to transmit capacity of the non-volatile storage medium (122) for access by the computing device (102) as volatile memory.

3. The memory device of claim 1 or 2, wherein the processor is further configured to:
identify second data in the volatile storage medium for being removed from the volatile storage medium;
encrypt the second data based on another key of the at least two keys, and output a second encrypted data; and
store the second encrypted data in the non-volatile storage medium.

4. The memory device of claim 1 or 2, wherein the identified key is associated with a first criterion related to the data, and another key of the at least two keys is associated with a second criterion related to the data, wherein the processor is further configured to:
detect the first criterion; and
select the key as the identified key based on detecting the first criterion.

5. The memory device of claim 1 or 2, wherein the identified key is assigned to a first region of the non-volatile storage medium (122), and another key of the at least two keys is assigned to a second region of the non-volatile storage medium (122).

6. The memory device of claim 5, wherein the first region is allocated to a first virtual machine (108a) of the computing device (102), and the second region is allocated to a second virtual machine (108b) of the computing device (102).

7. The memory device of any one of claims 1 to 6, wherein a region of the non-volatile storage medium (122) is allocated to a virtual machine (108), wherein the computing device (102) is configured to provide the identified key based on allocating a region of the non-volatile storage medium (122) to a virtual machine (108) of the computing device (102).

8. The memory device of claim 7, wherein the identified key has a first status, wherein the processor is configured to mark the identified key as having a second status different from the first status based on a command from the computing device (102).

9. The memory device of any one of claims 1 to 8, wherein the processor is further configured to:
decrypt the data based on the identified key, and output decrypted data; and
store the decrypted data in the volatile storage medium (120).

10. The memory device of any one of claims 1 to 9, wherein the computing device (102) is configured to transmit a key identifier (406) and the data in a request, wherein the processor is configured to identify the key as the identified key based on the key identifier (406).

11. A method comprising:
storing (500) by a memory device (104) coupled to a computer device (102), at least two keys;
receiving (502) by the memory device (104) data from the computing device (102);
identifying (504) by the memory device (104) a key of the at least two keys associated with the data as an identified key;
encrypting (506) by the memory device (104) the data based on the identified key, and outputting encrypted data; and
storing (508) by memory device (104) the encrypted data in a non-volatile storage medium (122) of the memory device (104).

12. The method of claim 11 further comprising:
transmitting capacity of the non-volatile storage medium (122) for access by the computing device (102) as volatile memory.

13. The method of claim 11 or 12, wherein the identified key is assigned to a first region of the non-volatile storage medium (122), and another key of the at least two keys is assigned to a second region of the non-volatile storage medium (122).

14. The method of claim 13, wherein the first region is allocated to a first virtual machine of the computing device (102), and the second region is allocated to a second virtual machine of the computing device (102).

15. The method of any one of claims 11 to 14, wherein a region of the non-volatile storage medium (122) is allocated to a virtual machine, wherein the computing device (102) is configured to provide the identified key based on allocating a region of the non-volatile storage medium (122) to a virtual machine of the computing device (102).
